# EUROPEAN PATENT APPLICATION

(11) **EP 2 428 927 A2**
(43) Date of publication of application: **14.03.2012**
(21) Application number: 11180365.6
(22) Date of filing: 07.09.2011
(51) Int. Cl.: G06Q 30/00

(54) **Lot identification codes for packaging**

(30) Priority: 08.09.2010 US 877467
(71) Applicant: Yottamark, Inc., Redwood City, California 94065 (US)
(72) Inventor: Grant, Elliott, Redwood City, CA California 94065 (US); Carr, J. Scott, Redwood City, CA California 94065 (US)
(74) Representative: Mollekopf, Gerd Willi

(57) **Abstract**

Lot identification codes (200) marked on packaging comprise a fixed number of digits with substrings representing each of a date, a Stock-Keeping-Unit (SKU), a lot number, and optionally a line and a checksum. The same fixed number of digits is used for the lot identification codes (200) employed by multiple producers across an industry, or across multiple industries. The lot identification codes (200) are therefore readily recognizable by search engines (610) and otherwise reduce the number of steps required for consumers and others along the supply chain to obtain lot-specific information about packaged goods. Additionally, whenever an individual submits a lot identification code, it provides an opportunity to collect information about the product at that point along the supply chain. The information can link the quality of the product at the time and place of the request to the time and place of the packaging.

## Description

### Field of the Invention

The present invention relates to the field of packaging of consumer goods and more particularly to lot codes applied to packaging.

### Description of the Prior Art

The majority of consumer goods, such as a bagged, canned, and boxed foods, healthcare products, pharmaceuticals, and the like, have a date (e.g. a best-by or expiration date) and lot code marked on the packaging. These markings are provided for various reasons including regulatory compliance, traceability, as a benefit to consumers, and for stock rotation. In some instances the date and lot codes are set apart, and in other instances they are combined in various ways. Standardized company identification numbers have also been used together with lot codes on packaging.

The markings are typically produced by high-speed marking systems (sometimes referred to in the art as variable printing systems) that either print or laser mark on the packaging. Printing technologies employed by such high-speed printing systems include direct thermal transfer, inkjet, hot stamp, and ink stamp, for example. High-speed marking systems are typically configured with an internal clock to keep track of the date, or alternately are configured to receive the date electronically. Such systems are also typically configured to electronically receive the lot and line numbers to be printed.

Some manufacturers and organizations provide phone numbers and/or websites through which consumers can enter lot numbers from packaging to receive lot-specific information. In some cases the consumer must first enter a UPC code before entering the lot number, however, searches on the UPC code alone cannot reveal any lot-specific information.

### SUMMARY

The invention is defined in claims 1, 10 and 12, respectively. Particular embodiments are set out in the dependent claims.

The present invention enables consumers and others along the distribution chain to merely scan a lot identification code on a package with a hand-held communication device with a built-in optical scanner, such as a smartphone, and receive with the communication device lot-specific information about a product in the package. The person performing the scanning can then provide feedback about the product, such as quality information, again using the communication device.

The present invention provides methods for labeling packaging with lot identification codes that provide both date and lot information. An exemplary method comprises marking a lot identification code on multiple units of packaging, and packaging a lot of a product into the units of the packaging. Packaging the product can precede or follow marking the packaging. In various embodiments, marking the lot identification code comprises marking the lot identification code adjacent to a call to action on the artwork of the packaging. Each lot identification code includes a string of numerals to represent the date, a first string of alphanumeric characters derived from a SKU for the product, a second string of alphanumeric characters derived from a lot number for the lot, and optionally a third string of alphanumeric characters representing one of a multiple of packaging lines. Also optionally, the lot identification code also comprises an alphanumeric checksum character. In some embodiments, the method further comprises producing the lot of the product. In some instances, as the lot is being produced the packaging is being marked and then filled, or filled and then marked.

In various embodiments, the exemplary method further comprises using multiple packaging lines to package the units of the product. In these embodiments, each lot identification code additionally comprises a third string of alphanumeric characters, or simply a single digit, representing one of the multiple packaging lines. Accordingly, in these embodiments, the lot identification codes marked on the packaging each have the same date and first and second strings, but differ in the digit or string representing the line.

In various embodiments, the exemplary method further comprises creating the lot identification code. In some of these embodiments creating the lot identification code comprises deriving the first string from the SKU by truncating the SKU and/or comprises deriving the second string from the lot number by truncating the lot number. Creating the lot identification code optionally comprises verifying that the first string is globally unique. In additional embodiments creating the lot identification code can include calculating a checksum character based on the values of other digits of the lot identification code.

In various embodiments, the exemplary method further comprises sending the lot identification code to a host computing system. In further of these embodiments the exemplary method comprises sending attribute data associated with the lot identification code to the host computing system. The host computing system stores the lot identification codes and associated attributes for later retrieval.

The present invention further provides methods for providing lot-specific product information. An exemplary such method comprises a first computing system receiving a schema, a lot identification code, and attribute data and creating a record in a computer-readable memory device that associates the lot identification code with the schema and the attribute data. The method further comprises receiving the lot identification code with a second computing system, and responsively the second computing system using the lot identification code to locate the record in the computer-readable memory device, using the schema to extract a first string of digits and a second string of digits from the lot identification code, and sending at least a part of the attribute data from the second computing system to a requestor that sent the lot identification code to the second computing system.

In some embodiments, the first string comprises a date, the attribute data does not include the date, and sending at least a part of the attribute data from the second computing system includes sending the date. In various embodiments, the method further comprises, responsive to receiving the lot identification code by the second computing system, calculating a checksum from values of digits in the lot identification code according to the schema. Also in various embodiments, the method further comprises adding a recall notification to the record as attribute data, and sending the at least a part of the attribute data from the second computing system includes sending the recall notification.

Still other methods for providing lot-specific product information comprise receiving, with a first computing system, a schema, then receiving, with the first computing system, a lot number, a date, a SKU, and attribute data, where the lot number is associated with the date, SKU, and attribute data. These methods additionally comprise creating a lot identification code by deriving a first digit string from the SKU, deriving a second digit string from the lot number, and appending together the date and the first and second digit strings according to the schema to create a lot identification code. Further, these methods comprise creating a record in a computer-readable memory device that associates the lot identification code with the attribute data.

In various embodiments the methods further comprise receiving, with a second computing system, the lot identification code and responsively using the lot identification code to locate the record in the computer-readable memory device, and then sending at least a part of the attribute data from the second computing system. Some of these embodiments further comprise, responsive to receiving the lot identification code by the second computing system, calculating a checksum from values of digits in the lot identification code according to the schema. Also, some of these embodiments further comprise adding a recall notification to the record as attribute data, and sending at least a part of the attribute data from the second computing system includes sending the recall notification.

As an embodiment of any of the previous methods, the method may additionally comprise producing the lot of the product and/or creating the lot identification code.

In one aspect, a method is provided consisting of the steps: scanning a lot identification code on a package with a mobile scanning device (in particular with a smartphone) and receiving lot-specific information about a product in the package on the smartphone in response; and sending information about the quality of the product in the package using the smartphone. This aspect of the invention can be combined with any of the features disclosed herein individually or with any combination of features. In particular the steps of scanning with the smartphone can be combined in any of the methods mentioned herein. In particular sending and/or retrieving of information is made via a portal or a search engine. This makes lot-based product information much more accessible to the public.

### BRIEF DESCRIPTION OF DRAWINGS

- FIG. 1: is a flowchart representation of a method according to an exemplary embodiment of the invention.
- FIG. 2: is a representation of a lot identification code according to an exemplary embodiment of the invention.
- FIGs. 3 and 4: are schematic representations of systems according to two exemplary embodiments of the invention.
- FIG. 5: is a portion of a packaging including a lot identification code according to an exemplary embodiment of the invention.
- FIG. 6: is a schematic representation of a system according to another exemplary embodiment of the invention.
- FIG. 7: is a flowchart representation of a method according to another exemplary embodiment of the invention.

### DETAILED DESCRIPTION OF THE INVENTION

The present invention is directed to lot identification codes that can be globally implemented across various packagers (those that package consumer goods, e.g., growers, manufactures, bottlers, etc.) to simplify obtaining lot-based information by consumers and others along the supply chain. The lot identification codes of the invention are characterized by a set number of digits, for example 16 digits, that is employed by many packagers within an industry (e.g., all food producers) or by many packagers across multiple industries. Each packager can allocate a subset, or string, of the total available digits to represent each of a date, a Stock-Keeping Unit (SKU), and a lot number. Optionally, an additional string, or a single digit, of the total available digits can represent a line (e.g., manufacturing line, bottling line, packing line, etc.). Also optionally, one of the digits of the lot identification code can comprise a checksum. The order of the digit strings representing the date, SKU, lot number, and line is a further variable.

Lot identification codes marked on packaging comprise a fixed number of digits with substrings representing each of a date, a Stock-Keeping-Unit (SKU), a lot number, and optionally a line and a checksum. The same fixed number of digits is used for the lot identification codes employed by multiple producers across an industry, or across multiple industries. The lot identification codes are therefore readily recognizable by search engines and otherwise reduce the number of steps required for consumers and others along the supply chain to obtain lot-specific information about packaged goods. Additionally, whenever an individual submits a lot identification code, it provides an opportunity to collect information about the product at that point along the supply chain. The information can link the quality of the product at the time and place of the request to the time and place of the packaging.

Product packaging is marked with the lot identification codes in the conventional manner using high-speed marking systems. The lot identification codes of the invention then provide the same functions as the codes employed in the prior art, namely, that of conveying the date and other information. To help individuals locate such information within the overall string of digits, the packaging can include text proximate to the lot identification code. For example, the packaging can include the word "date" adjacent where the digits of the date string are located so that the date is recognizable as such.

Further, the lot identification codes of the invention make accessing lot-based information about packaged goods more convenient for consumers and others. With a set number of digits implemented across many packagers, popular search engines, for example, can be configured to recognize strings of digits of that length (e.g., 16) as pointing to a searchable database of n-digit lot identification codes. Conventional entry of lot identification codes through web-based and telephone interfaces can also be centralized through web portals and phone numbers (e.g., (800) LOT-CODE) so that consumers and others do not need to, for example, go through the trouble of first identifying the website of a packager, navigating to that page, entering a UPC code, and then entering the lot code. Additionally marking the lot identification codes on packaging in machine-readable formats like barcodes makes it possible to later enter the lot identification codes more conveniently and without transcription errors through the use of scanning devices. The ability to use mobile scanning devices, such as smartphones, in conjunction with simple portals or search engines makes lot-based product information much more accessible to the public.

When a lot identification code is submitted and a corresponding record is accessed, some or all of the record can be supplied to the requestor, depending on permissions of the requestor, for example. In addition to providing lot-based information to the requestor, a channel then exists for the requestor, such as a consumer, to provide information back to the packager. Such information can include the location of the requestor as well as feedback on quality, satisfaction, and so forth. By making the lot-based information (e.g., farm location, whether the product is subject to a recall, etc.) more readily accessible to the public, lot-based feedback becomes more accessible to the packagers.

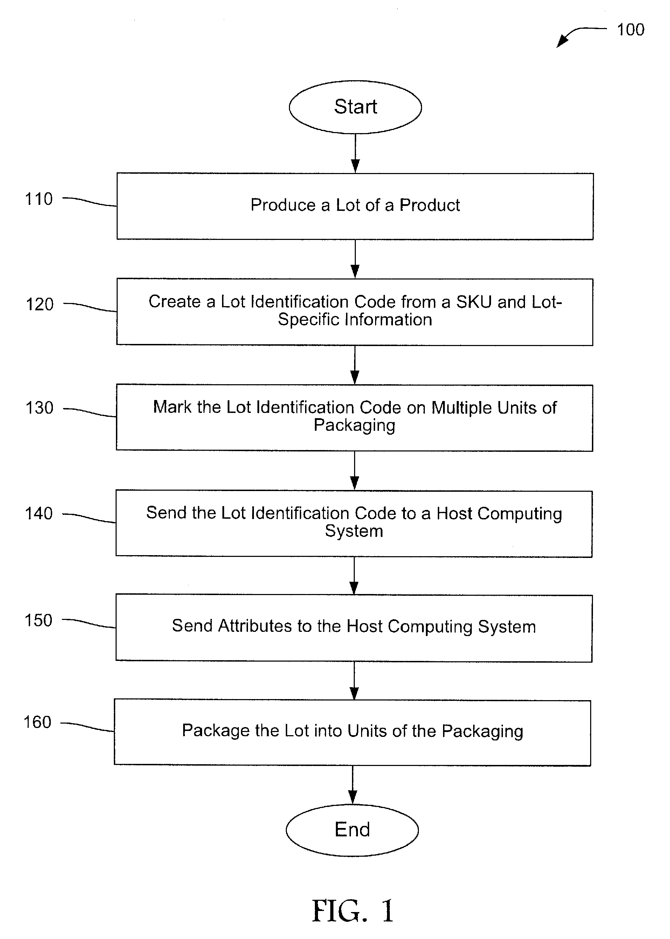

FIG. 1 shows a flowchart representation of an exemplary method 100 of the invention. The method 100 can be, for instance, for packaging lots of consumer goods, such as packaged foods. Broadly, the method 100 encompasses steps of producing a lot of a product, marking each unit of packaging for the product with a lot identification code, and packaging the lot, where the lot identification code comprises a number of digit strings to represent various information, as set forth herein. The method 100 optionally also comprises any or all of the steps of creating the lot identification code, sending the lot identification code to a host computing system, and sending attributes associated with the lot identification code to the host computing system. Some of the steps of the method 100 can be performed by a marking system which may be associated with a packaging line.

More specifically, the method 100 can comprise an optional step 110 of producing a lot of a product. A lot, as used in the art and herein, refers to a quantity of a product, where that quantity is produced under essentially the same conditions, and is intended to have uniform quality and characteristics. A lot can comprise multiple units that are subsequently packaged (e.g., heads of lettuce), or can comprise a homogenous mixture (e.g., liquids, powders, etc.) that is defined into units through packaging. Step 110 is optional to the method 100 as the product to be packaged need not be produced by the same entity that is performing the packaging. In other embodiments, however, production of the product and the packaging thereof happen in rapid succession under the control of the same producer.

The method 100 can also comprise a step 120 of creating a lot identification code from a SKU as well as lot-specific information such as the date of production and the lot number. Creating the lot identification code can be performed by a system for marking packaging, or can be performed separately and transmitted to the package marking system. In various embodiments, the step 120 of creating the lot identification code can occur either before or after the step 110 of producing the lot. Since creating the lot identification code can be performed by an entity other than the packager, the step 120 is optional to the method 100.

In some instances, where packaging the lot is performed on multiple parallel lines, a different lot identification code is created for each line. Multiple parallel lines are used, for example, in produce packing, beverage bottling, and canning. Pharmaceuticals and personal care products are likewise often packaged in parallel lines. In such instances, each of the different lot identification codes comprises the same strings for the date, SKU, and lot number, but differ in a third string of alphanumeric characters that represents the line. In these embodiments, for each line, the step 120 comprises creating the lot identification code from the SKU, the date, the lot number, and the line.

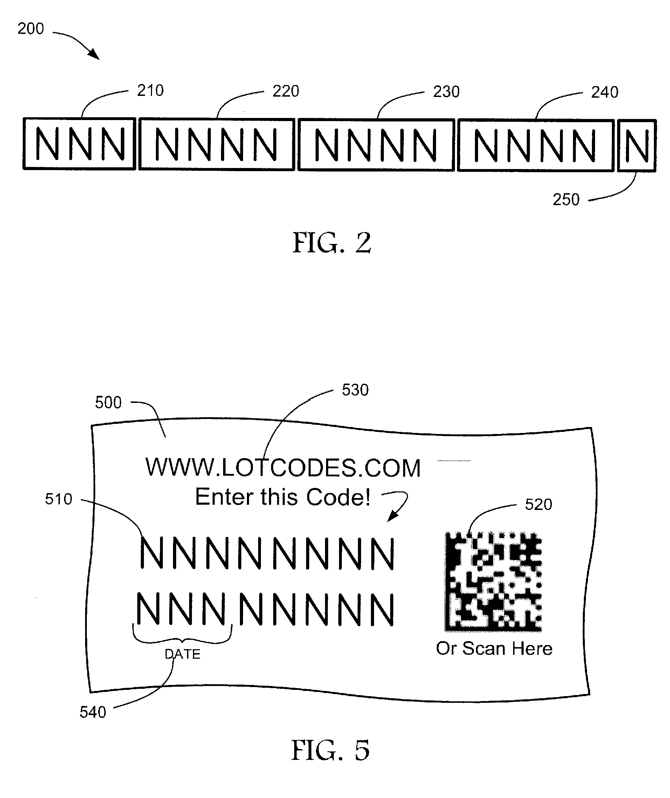

FIG. 2 illustrates an exemplary a lot identification code 200. The lot identification code 200 comprises a string of digits, here 16 digits, where those digits are subdivided into a string 210 of numerals to represent a date, a first string 220 of alphanumeric characters derived from a SKU for the product, a second string 230 of alphanumeric characters derived from a designation for the lot number, an optional third string 240, or single digit, of alphanumeric characters to represent each packaging line, and an optional alphanumeric checksum character 250. As used herein, a numeral is any of 0-9, an alphanumeric character is either a numeral or a letter A-Z, a digit is either a numeral or an alphanumeric character, and a digit string, or simply "string," is two or more consecutive digits. In different schema, the orders of the strings 210, 220, 230, 240, and optionally 250 are different. The lengths of the respective strings 210, 220, 230, 240 can be different in different schema such that, for example, the length of string 240 is two digits and the length of string 230 is six digits. As noted, the packaging line can be represented by a single digit, either numeric or alphanumeric, where the number of parallel lines is sufficiently small.

Further, in some embodiments the lot identification code 200 is contextualized based on the first string 210 derived from the SKU. In these embodiments the first string 210 is required to be of a fixed length and position within the lot identification codes 200 employed by multiple different packagers, and each first string 210 is associated with a schema that specifies the lengths of the various other strings, and their relative positions within the lot identification code 200. In these embodiments each first string 210 is unique across the multiple different packagers (i.e., the first string 210 is globally unique).

The string 210 of numerals can represent, for instance, a date of production, a date of packaging, a sell-by date, or a use-by date. In some embodiments, the date can be three numerals to represent the Julian Date where January 1^{st} is represented by 001 and December 31^{st} is represented by 365. Alternately, four numerals can be used with two numerals representing the month and two numerals representing the day of the month. Also, optionally, the string 210 can comprise four alphanumeric digits with two digits representing the month (e.g., JY or 07) and two numerals representing the day of the month. Additional digits can be used to represent the year, in various embodiments.

The first string 220 of alphanumeric characters is derived from the SKU assigned to the product. In some instances the first string 220 will equal the SKU for the product, such as when the schema allocates four digits for the SKU and the SKU comprises four digits. Zeros can be added before or after the SKU, by convention, to derive the first string 220 where the SKU comprises fewer digits than allocated for the first string 220. In those instances where the SKU comprises more digits than allocated for the first string 220, the first string 220 can be derived from the SKU by truncating digits, such as first or last digits, from the SKU.

The second string 230 of alphanumeric characters is derived from the lot number for the lot. In some instances the second string 230 will comprise the lot number for the lot, for example, where the schema allocates six digits for the lot number and the lot number comprises six digits. Zeros can be added, by convention, before or after the lot number to derive the second string 230 where the lot number comprises fewer digits than allocated for the second string 230. Where the lot number comprises more digits than allocated for the second string 230 then the second string 230 can be derived from the lot number by truncating digits, such as first or last digits, from the lot number. In instances where lot numbers are created sequentially, truncating first digits that rarely change from one lot to the next is preferable.

An optional third string 240 of alphanumeric characters, or a single digit, can represent the line in the lot identification code 200 in those instances where multiple lines are employed to package the lot. The third string 240 can additionally represent a production line in addition to the packaging line where production of the product occurs in line with packaging. The lot identification code 200 optionally also comprises a single digit as an alphanumeric checksum character 250 which is calculated from values of other digits in the lot identification code 200.

In some embodiments, the schema is established in advance of the method 100, for example, through the use of a "wizard." In this way the packager is given the set number of digits employed across the industry and guided through a process of creating a schema by specifying the lengths of the various strings so that all of the digits of the lot identification code 200 are accounted for. The packager can also specify whether a checksum digit 250 is included, and may also specify the arrangement of the various strings. Further, the packager can specify how the various strings are derived. For instance, if four digits are allocated to the SKU, and the packager uses five-digit SKUs, then the packager can specify that the first string 220 comprises only the last four digits of each SKU. In some embodiments, where the lot identification code 200 is contextualized based on the first string 210 derived from the SKU, the wizard requires that the first string 210 be of a fixed length and specifies the required position within the lot identification code 200 for the first string 210. The wizard also confirms that the first string 210 is globally unique in that it is not already in use by another packager, and if there is a conflict, may suggest an alternative first string 210 that is still derived from the SKU.

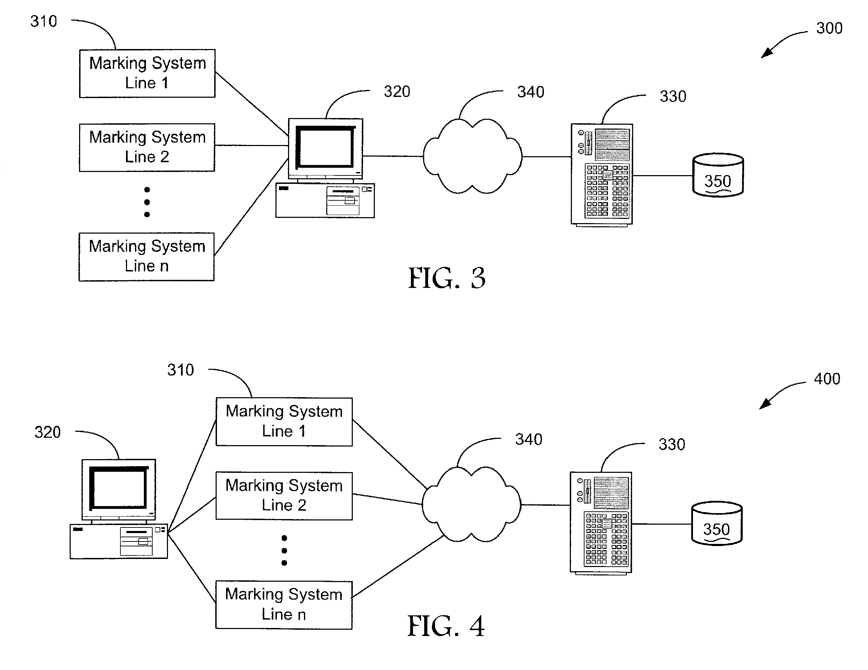

In some embodiments, the wizard is web-based and served by a host computing system to a client computing system (see FIGs. 3 and 4, below). In other embodiments, the wizard is provided on the client computing system through system set-up software. In still other embodiments, the schema is established in advance and provided to the packager.

Returning to FIG. 1, the method 100 further comprises a step 130 of marking the lot identification code on multiple units of packaging. Step 130 can be achieved through the use of high-speed marking systems that can be either printing systems or laser marking systems, for example. The marking system can either be configured to also perform the step 120 of creating the lot identification code, else the marking system can be configured to receive the lot identification code from an external source such as the client computing system (see FIGs. 3 and 4, below).

In some embodiments, marking the lot identification code is step 130 includes an alignment step so that the lot identification code properly aligns with the artwork on the packaging. Accordingly, in some embodiments the step of marking comprises marking the lot identification code adjacent to related artwork such as text (e.g., "DATE") or a call to action. A call to action, as used herein and as understood in the art, is text and/or graphics on packaging intended to induce consumers to take some action such as recycle the packaging or visit a website. An exemplary call to action in the present context includes a Universal Resource Locator (URL) and optionally includes instructions such as "Enter this Code for More Information!" In the alternative, rather than have the call to action as part of the artwork on the packaging, the call to action can be marked on the packaging alongside the lot identification code.

The method 100 optionally further comprises a step 140 of sending the lot identification code to a host computing system. Step 140 can be understood with reference to FIGs. 3 and 4 which illustrate alternative systems 300 and 400 according to two exemplary embodiments of the invention. In FIG. 3 each packaging line has an associated marking system 310. Each of the marking systems 310 is in communication with a client computing system 320. The client computing system 320 is in further communication with a host computing system 330 over a network such as a LAN or the Internet 340 or via a dedicated connection. The host computing system 330 is further in communication with a computer-readable memory device 350.

The system illustrated by FIG. 4 differs from that illustrated by FIG. 3 in that the marking systems 310 are in direct communication with the host computing system 330 rather than in communication through the client computing system 320. The embodiments illustrated by FIG. 4 optionally include the client computing system 320, however, the client computing system 320 in these embodiments is not a communication link between the marking systems 310 and the host computing system 330.

Exemplary marking systems 310 can comprise high-speed printing or laser marking systems, as described previously. Exemplary client and host computing systems 320, 330 can comprise servers or personal computers (PCs). Exemplary computer-readable memory devices 350 can comprise magnetic or optical mass storage devices. Neither paper nor carrier waves constitute a computer-readable memory device 350, as the term is used herein.

Returning to step 140, sending the lot identification code to the host computing system can comprise, in some instances, transmitting the lot identification code over a network such as the Internet 340, or over a dedicated connection, either in real-time or periodically, such as daily. In some embodiments, such as illustrated by FIG. 4, each marking system 310 sends lot identification codes to the host computing system 330, while in other embodiments (such as in FIG. 3) the lot identification codes are sent by the client computing system 320 to the host computing system 330. In either situation the host computing system 330 records the lot identification codes in the computer-readable memory device 350. In some embodiments, sending the lot identification code to the host computing system 330 comprises sending the date, SKU, lot number, and line to the host computing system 330 which then derives the lot identification codes by using the appropriate schema and the rules for deriving the strings.

Method 100 additionally optionally comprises a step 150 of sending attribute data to the host computing system 330. Here, the attribute data can be associated with the particular SKU (e.g., package size) or lot number (e.g., harvest temperature), for example. The client computing system 320 sends the attribute data, in some embodiments. The host computing system 330 then records the attribute data in the computer-readable memory device 350. Lot identification codes and attribute data can be stored in various ways within the computer-readable memory device 350. For example, each lot identification code can have an associated record that includes all of the attribute data that relates to that lot identification code.

It will be appreciated that some attribute data can be received by the host computing system 330 from sources other than the client computing system 320, and at different times. As one example, in the situation of a recall, a recall notification can be received by the host computing system 330 from a third-party computing system such as controlled by a regulatory agency or industry association. The host computing system 330 then stores the recall notification as further attribute data associated with the affected lot numbers.

Method 100 additionally comprises a step 160 of packaging the lot into units of the packaging. In various embodiments, step 160 follows step 130 such that the units of the product are packaged into those units of the packaging previously marked with the lot identification code. In other embodiments the step 130 follows step 160 such that marking the packaging occurs after the products have been packaged in the packaging. It will be appreciated that the step 130 of marking the packaging can be performed while also performing the step 160 of packaging the lot into units of the packaging, and in some embodiments also while performing the step 110 of producing the lot. Thus, while the lot is being produced, packaging is both being marked and being filled from the lot.

FIG. 5 illustrates a portion of a packaging 500 such as a portion of a can, box, carton, bag, or clamshell. The packaging 500 includes a 16-digit lot identification code marked thereon in both a human-readable format 510 and a machine-readable format 520 proximate one another. In FIG. 5 the machine-readable format 520 comprises a two-dimensional (2D) Data Matrix, but could alternatively comprise a linear barcode. The packaging 500 also includes a call to action 530 proximate to the lot identification code and graphics 540 to indicate which digits of the human-readable format 510 represent date. While the human-readable and machine-readable formats 510, 520 are marked on the packaging 500, the call to action 530 and graphics 540 may be either part of the artwork of the packaging 500 or marked on the packaging 500 at the same time as the lot identification code. It is noted that the schema of the lot identification code in FIG. 5 is different than the schema of the lot identification code 200 (FIG. 2) in that the string of numerals for the date are in different locations.

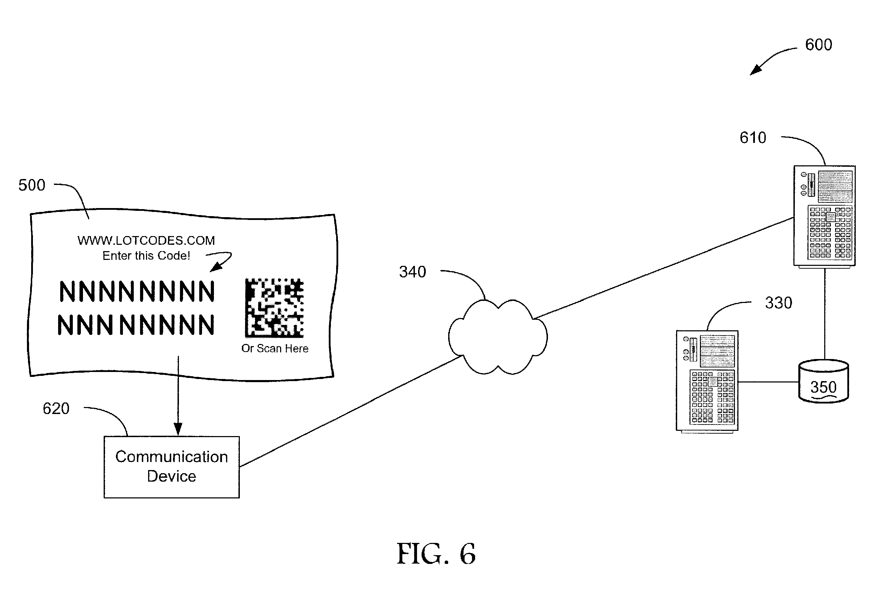

FIG. 6 schematically represents a system 600 for providing a requestor with lot-specific information. In FIG. 6 a first computing system 330 (FIG. 3) receives lot identification codes and attribute data and stores the same in computer-readable memory device 350 as described with respect to FIGs. 3 and 4. In some embodiments the first computing system 330 first receives a schema, and then subsequently receive a lot number, a SKU, a date, attribute data, and optionally a line, and then uses the schema to create a lot identification code according from the lot number, SKU, date, and line. In these embodiments the first computing system 330 stores the lot identification code in association with the attribute data in the computer-readable memory device 350.

A second computing system 610, also comprising a server or PC for example, can access the computer-readable memory device 350. The second computing system 610 is in communication with a network such as the Internet 340 and is configured to receive requests for information including a lot identification code. In some embodiments the first and second computing systems 330, 610 are combined into one computing system.

In operation, a requestor such as a consumer, wholesaler, retailer, or inspector uses a communication device 620 such as a PC, smartphone, or in-store kiosk, for instance, to request lot-specific information by submitting a lot identification code from packaging 500 over the network to the second computing system 610. The second computing system 610 then returns the information associated with the lot identification code to the communication device 620.

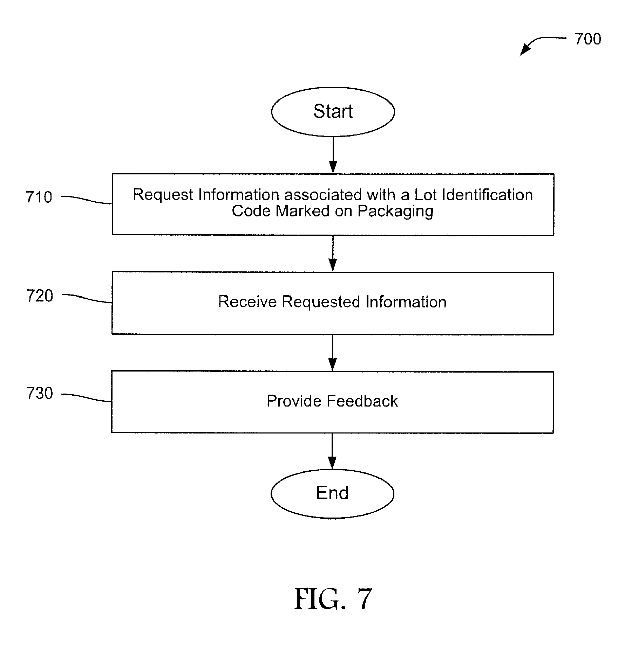

FIG. 7 is a flowchart representation of another exemplary method 700 of the invention and is directed to retrieving lot-specific information associated with a lot identification code on a package. The method 700 can be performed, for example, by a requestor at a kiosk, or holding a hand-held communication device, or using a PC.

Method 700 comprises a step 710 of requesting information associated with a lot identification code marked on packaging. In some embodiments, the step of requesting the information is performed with a web browser operating on a communication device 620. The web browser is used to navigate to a web portal which may be either brand-specific or independent of any particular brand or producer. The requestor then enters the lot identification code in a search page served by the web portal. Entering the lot identification code can comprise manually entering the lot identification code, voice-entry of the lot identification code or scanning the lot identification code when provided in a machine-readable format 520.

In other embodiments, the step 710 of requesting information consists of simply scanning the lot identification code using a device, such as a smartphone. The logic of the device then enters the lot identification code in a web browser, or recognizes the total number of digits in the lot identification code as a pointer to a particular web portal, or in like manner automatically completes the request such that the requestor does not have to take further action beyond the act of scanning the lot identification code in order to receive the requested information. In these embodiments, the requestor can complete the step 710 of requesting information, for example, by simply opening an appropriate smartphone application and capturing an image of the lot identification code with the smartphone's camera. As another example, the requestor can complete the step 710 of requesting information by simply passing the lot identification code in front of a dedicated scanner, such as provided on a kiosk with a display in a grocery store. Similarly, an inspector with a hand-held scanner having wireless capabilities can complete the step 710 by scanning the lot identification code.

In various embodiments, information in addition to the lot identification code is transmitted in step 710 to request information. An in-store kiosk, for example, can transmit a store identifier each time a lot identification code is scanned. Likewise, a hand-held scanner used by an inspector can transmit an identification and/or a location of the inspector each time a lot identification code is scanned.

A computing system that receives the request and/or additional information from the requestor can perform various operations. One such operation is to verify the lot identification code by calculating a checksum character and comparing the calculated value against the received checksum character 250. A failure to match indicates that the lot identification code was manually entered incorrectly and the requestor can then be prompted to re-enter the lot identification code. Assuming a matching lot identification code is found, another operation is to retrieve records associated with the lot identification code. Still another operation is to return some or all of the retrieved information to the requestor. Which information is returned can be dependent on the location and/or identity of the requestor, for example.

Returning to FIG. 7, in a step 720 the requested information is received by the requestor. The requested information can be served in a response page by a web server and viewed by the requestor in a web browser, for instance. The steps 710 and 720 can be iterative, in some instances. For example, the response page can be independent of the identity of the requestor and return only publically available information, but can also provide a mechanism for the requestor to gain access to non-public information by providing a user name and password or other credentials. Here, steps 710 and 720 are repeated by making a second request for non-public information and receiving the same.

As noted previously, once the steps 710 and 720 have occurred, a channel exists through which further information can be solicited from the requestor. The response received in step 720 can prompt the requestor to provide feedback. For instance, a requestor can be asked to provide their location such as by enabling their smartphone to communicate their GPS coordinates. As another example, the requestor can be asked to complete a survey regarding the quality of the product, for example prompted with exemplary images of products of different quality levels, when and where it was purchased, and so forth. Accordingly, in a step 730 the requestor can provide feedback either directly to the packager, or to an intermediary that can transmit the feedback to the packager. In this way the packager can develop an understanding of how the product is being received in the marketplace, how long it is taking for the product to reach consumers, where the product is being received, and in some situations correlate the quality perceived by requestors to factors such as the time in transit, the distance traveled, the retailer, and production conditions. Such feedback and the correlations that can be drawn can be especially important to producers of perishable products like milk and fresh produce.

Some steps of the methods described herein can be performed, for example, through the use of hardware, such as application-specific integrated circuits (ASICs), specifically designed to perform the particular functions of the method. Various steps of the methods described herein can also be performed through the use of firmware residing, for instance, in read only memory (ROM) or flash memory, where the firmware is programmed to perform the particular functions of the method steps. Steps of the methods described herein can also be performed by a microprocessor capable of executing software residing in a memory, for example, in random access memory (RAM), where the computer instructions embodied in the software define the method steps. Any combination of two or more of hardware, firmware, and software can also be employed. Hardware, firmware, and/or software for implementing method steps may be embodied in hand-held scanners and smartphones running third-party applications, for example. Hardware, firmware, and/or software for implementing method steps may also be embodied in various types of computing systems such as servers and personal computers. It will be appreciated that such computing systems, when configured to follow specific logic embodied in their circuits or programming instructions, or both, constitute specific machines.

In the foregoing specification, the invention is described with reference to specific embodiments thereof, but those skilled in the art will recognize that the invention is not limited thereto. Various features and aspects of the above-described invention may be used individually or jointly. Further, the invention can be utilized in any number of environments and applications beyond those described herein without departing from the broader scope of the specification. The specification and drawings are, accordingly, to be regarded as illustrative rather than restrictive. It will be recognized that the terms "comprising," "including," and "having," as used herein, are specifically intended to be read as open-ended terms of art.

## Claims

1. A method comprising:
marking (130) a lot identification code (200), specific to a lot of a product, on multiple units of packaging, each lot identification code including
a string (210) of numerals to represent a date,
a first string (220) of alphanumeric characters derived from a SKU for the product, and
a second string (230) of alphanumeric characters derived from a lot number for the lot; and
packaging the lot, using multiple packaging lines (310), into units of the packaging.

2. The method of claim 1, wherein each lot identification code (200) further includes a third string (240) of alphanumeric characters representing one packing line of the multiple of packaging lines (310).

3. The method of claim 1 or 2, wherein each lot identification code (200) further includes an alphanumeric checksum character (250).

4. The method of claim 1, 2 or 3, further comprising creating the lot identification code (200).

5. The method of claim 4, wherein creating the lot identification code (200) comprises
deriving the first string (220) from a Stock-Keeping Unit (SKU) by truncating the SKU;
verifying that the first string (220) is globally unique;
deriving the second string (230) from the lot number (200) by truncating the lot number; and/or
calculating a checksum character (250) based on the values of other digits of the lot identification code (200).

6. The method of any of the previous claims, wherein marking the lot identification code (200) follows packaging the product into units of the packaging.

7. The method of any of the previous claims, wherein marking the lot identification code (200) comprises printing the lot identification code.

8. The method of any of the previous claims, wherein marking the lot identification code (200) comprises marking the lot identification code adjacent to a call to action on the artwork of the packaging.

9. The method of any of the previous claims, further comprising sending the lot identification code (200) or the attribute data associated with the lot identification code (200) to a host computing system (330).

10. A method comprising:
receiving, with a first computing system (330), attribute data associated with a lot identification code (200) and further associated with a schema;
creating a record in a computer-readable memory device (350) that associates the lot identification code (200) with the schema and the attribute data;
receiving, with a second computing system (610), the lot identification code (200) and responsively
using the lot identification code (200) to locate the record in the computer-readable memory device (350),
using the schema to extract a first string (220) of digits and a second string (230) of digits from the lot identification code, and
sending at least a part of the attribute data from the second computing system (610).

11. The method of claim 10, wherein the first string (220) comprises a date, the attribute data does not include the date, and wherein sending at least a part of the attribute data from the second computing system (320) includes sending the date.

12. A method comprising:
receiving, with a first computing system (330), a schema;
receiving, with the first computing system (330), a lot number, a date, a Stock-Keeping Unit (SKU), and attribute data, the lot number being associated with the date, SKU, and attribute data;
creating a lot identification code (200) by
deriving a first digit string from the SKU,
deriving a second digit string from the lot number, and
appending together the date and the first and second digit strings according to the schema to create a lot identification code (200); and
creating a record in a computer-readable memory device (350) that associates the lot identification code (200) with the attribute data.

13. The method of claim 12, further comprising receiving, with a second computing system (610), the lot identification code (200) and responsively using the lot identification code to locate the record in the computer-readable memory device (350), and then sending at least a part of the attribute data from the second computing system (610).

14. The method of claim 10, 11 or 13 further comprising, responsive to receiving the lot identification code by the second computing system (610), calculating a checksum from values of digits in the lot identification code (200) according to the schema.

15. The method of claim 10, 11, 13 or 14, further comprising adding a recall notification to the record as attribute data, wherein sending the at least a part of the attribute data from the second computing system (610) includes sending the recall notification.
